# EUROPÄISCHE PATENTSCHRIFT

(11) **EP 2 008 066 B1**
(45) Veröffentlichungstag und Bekanntmachung des Hinweises auf die Patenterteilung: **05.06.2013**
(21) Anmeldenummer: 07728064.2
(22) Anmeldetag: 13.04.2007
(51) Int. Cl.: G01F 1/58, G01F 1/60

(54) **MAGNETISCH-INDUKTIVE VORRICHTUNG ZUM MESSEN DES VOLUMEN- ODER MASSESTROMS EINES MEDIUMS**
MAGNETIC-INDUCTIVE DEVICE FOR MEASURING THE VOLUME FLOW RATE OR MASS FLOW RATE OF A MEDIUM
DISPOSITIF À INDUCTION MAGNÉTIQUE POUR LA MESURE DU DÉBIT VOLUMIQUE OU DU DÉBIT MASSIQUE D'UN FLUIDE

(30) Priorität: 20.04.2006 DE 102006018728
(43) Veröffentlichungstag der Anmeldung: 31.12.2008
(73) Patentinhaber: Endress+Hauser Flowtec AG, 4153 Reinach (CH)
(72) Erfinder: BUDMIGER, Thomas, 4107 Ettingen (CH)
(74) Vertreter: Andres, Angelika Maria
(86) Internationale Anmeldenummer: PCT/EP2007/053597
(87) Internationale Veröffentlichungsnummer: WO 2007/122115

(56) Entgegenhaltungen:
- DE-A1- 2 027 947
- GB-A- 2 292 613
- GB-A- 2 371 869
- US-B1- 6 920 799

## Beschreibung

Die Erfindung betrifft eine Vorrichtung zum Messen des Volumen- oder Massestroms eines Mediums, das ein Messrohr in Richtung der Messrohr-achse durchfließt, mit einem Magnetsystem, das ein das Messrohr durchsetzendes, im wesentlichen quer zur Messrohrachse verlaufendes Magnetfeld erzeugt, mit zumindest einer mit dem Medium gekoppelten Messelektrode, mit einer Referenzkomponente, die auf einem definierten Potential liegt, wobei die Referenzkomponente mit einem Widerstand verbunden ist, und mit einer Regel-/Auswerteeinheit, die anhand der in die zumindest eine Messelektrode induzierten Messspannung Information über den Volumen- oder Massestrom des Mediums in dem Messrohr liefert.

Aus der US-PS 6,920,799 B1 ist ein magnetisch-induktives Durchflussmess-gerät bekannt geworden, mit dem es möglich ist, die korrosive Zersetzung einer Referenzelektrode zu unterdrücken. Die bekannte Lösung geht davon aus, dass die Referenzelektrode üblicherweise in direktem Kontakt zu dem Medium ist. Fließt durch die Referenzelektrode ein Strom, so führt dies infolge von Elektrolyse zur Korrosion an der Referenzelecktrode. Dies ist natürlich höchst unerwünscht. Um den durch die Referenzelektrode fließenden Strom zu begrenzen, schlägt die o.g. Patentschrift vor, der Referenzelektrode einen Begrenzerwiderstand nachzuschalten. Die Patentschrift empfiehlt folglich eine Lösung, bei der ein durch die Referenzelektrode fließender Strom eindämmt wird, ohne dass die Ursache für den Stromfluss berücksichtigt oder behoben wird. Eine korrosive Zersetzung der Messelektroden bleibt unerkannt; folglich wird einer Korrosion der Messelektroden auch nicht entgegengewirkt. Zwar wird durch die bekannte Lösung die Korrosionsgefahr an der Referenz-elektrode reduziert, jedoch wird das Bezugspotential infolge des nachge-schalteten relativ großen Widerstands hochohmig, was zur Folge hat, dass sich die Stabilität und die Reproduzierbarkeit der Messwerte erheblich verschlechtern können.
Die DE 20 27 947 A1, GB-A-2 292 613 und GB-A-2 371 869 zeigen weitere magnetisch-induktive Durchflussmessgeräte mit Referenzelektroden.

Der Erfindung liegt die Aufgabe zugrunde, ein magnetisch-induktives Durchflussmessgerät vorzuschlagen, bei dem eine Fehlfunktion des Durchfluss-messgeräts oder zumindest einer Komponente des Durchflussmessgeräts zur Anzeige gebracht wird.

Die Aufgabe wird durch eine Messeinrichtung gemäß Anspruch 1 gelöst. Somit kann einer Korrosion der Referenzelektrode und der Messelektroden frühzeitig durch geeignete Gegenmaßnahmen entgegen-gewirkt werden.

Gemäß einer vorteilhaften Ausgestaltung der erfindungsgemäßen Vorrichtung wird vorgeschlagen, dass die Regel-/Auswerteeinheit einen IST-Stromwert mit einem vorgegebenen Grenz-Stromwert vergleicht und dass die Regel-/Auswerteeinheit ein Warnmeldung generiert, wenn der IST-Stromwert den Grenz-Stromwert überschreitet. Somit ist eine vorausschauende Wartung an dem Durchflussmessgerät möglich.

Eine vorteilhafte Ausgestaltung der erfindungsgemäßen Vorrichtung sieht vor, dass es sich bei der Referenzkomponente um eine Referenzelektrode handelt, die mit dem Medium in Kontakt steht. Bei dem definierten Potential handelt es sich bevorzugt um das Erdpotential. Selbstverständlich kann anstelle der geerdeten Referenzelektrode auch eine Erdungsscheibe in Verbindung mit der vorliegenden Erfindung eingesetzt werden.

Bei dem Widerstand handelt es sich gemäß einer vorteilhaften Ausgestaltung um einen relativ kleinen Widerstand. Ein geeigneter Widerstand ist kleiner als 10 Ohm. Bevorzugt beträgt der Widerstand 0,1 Ohm. Durch die erfindungs-gemäße Ausgestaltung eines niederohmigen Widerstands ist selbst im Falle eines Stromflusses der Einfluss auf das Bezugspotential minimal, so dass keine relevanten Rückwirkungen auf die Qualität der Messergebnisse auftreten.

In Verbindung mit der erfindungsgemäßen Vorrichtung wird es als vorteilhaft erachtet, wenn die IST-Stromwerte mittels beliebiger Gewichtung modifiziert werden. Diese Gewichtung kann beispielsweise 1 bzw. ein Vielfaches, I², I³, I^{1/2}, usw. betragen. Somit fallen hohe Ströme wesentlich stärker ins Gewicht als niedrige Ströme.
Bei der einzelnen Komponente gemäß Anspruch 1 handelt es sich beispielsweise um die Referenzelektrode oder um die Messelektroden.

Gemäß einer vorteilhaften Ausgestaltung der erfindungsgemäßen Vorrichtung ist eine Anzeigeeinheit vorgesehen, über die die Warnmeldung und/oder die Information über die verbleibende Lebensdauer des Messgeräts oder der zumindest einen Komponente des Messgeräts darstellbar ist.

Alternativ oder additiv ist eine Kommunikationseinheit vorgesehen, über die die Warnmeldung und/oder die Information über die Lebensdauer des Messgeräts oder zumindest der einen Komponente des Messgeräts an eine entfernte Leitwarte übertragen wird. Die Kommunikationseinheit überträgt die Daten drahtlos oder über eine Verbindungsleitung an die Leitwarte oder ein anderweitiges Service-Tool, z.B. ein Handheld.

Die Erfindung wird anhand der nachfolgenden Figuren näher erläutert. Es zeigt:

Fig. 1: eine schematische Darstellung eines aus dem Stand der Technik bekannten magnetisch-induktiven Durchflussmessgeräts,

Fig. 2: eine schematische Darstellung einer bevorzugten Ausgestaltung des erfindungsgemäßen magnetisch-induktiven Durchflussmessgeräts und

Fig. 3: ein Blockschaltbild der erfindungsgemäßen Stromdetektion zur Erkennung einer Fehlfunktion des erfindungsgemäßen magnetisch-induktiven Durchflussmessgeräts.

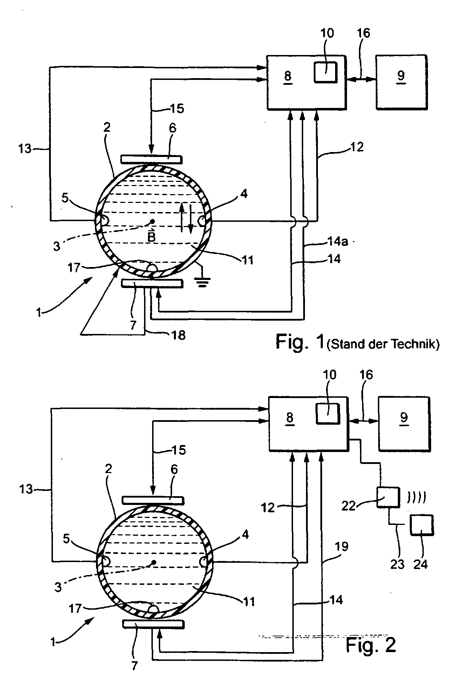

Fig. 1 zeigt eine schematische Darstellung eines aus dem Stand der Technik bekannten magnetisch-induktiven Durchflussmessgeräts. Entsprechende magnetisch-induktive Durchflussmessgeräte werden von der Anmelderin unter der Bezeichnung PROMAG angeboten und vertrieben. Das Messrohr 2 wird von dem Medium 11 in Richtung der Messrohrachse 3 durchflossen. Das Medium 11 ist zumindest in geringem Umfang elektrisch leitfähig. Das Messrohr 2 selbst ist aus einem nicht-leitfähigen Material gefertig, oder es ist zumindest an seiner Innenfläche mit einem nicht-leitfähigen Material ausgekleidet.

Das senkrecht zur Strömungsrichtung des Mediums 11 ausgerichteten Magnetfeld B wird im gezeigten Fall über die diametral angeordnete Spulenanordnung 6, 7 bzw. über zwei Elektromagnete erzeugt. Unter dem Einfluss der Magnetfeldes B wandern in dem Medium 11 befindliche Ladungsträger je nach Polarität zu den beiden entgegengesetzt gepolten Messelektroden 4, 5 ab. Die sich an den Messelektroden 4, 5 aufbauende Messspannung wird jeweils relativ zu dem Potential der Referenzelektrode 17 gemessen. Im gezeigten Fall liegt die Referenzelektrode 17 über die Leitung 18 auf Erdpotential bzw. auf Gehäusepotential. Die Messspannung ist proportional zu der über den Querschnitt des Messrohres 2 gemittelten Strömungsgeschwindigkeit des Mediums 11, d. h. sie ist ein Maß für den Volumenstrom des Mediums 11 in dem Messrohr 2. Das Messrohr 2 ist übrigens über Verbindungselemente, z. B. Flansche, die in der Zeichnung nicht gesondert dargestellt sind, mit einem Rohrsystem, durch das das Medium 11 hindurchströmt, verbunden.

Die Messelektroden 4, 5 befinden sich im gezeigten Beispiel in direktem Kontakt mit dem Medium 11; die Kopplung kann jedoch, wie bereits an vorhergehender Stelle erwähnt, auch kapazitiver Natur sein.

Über Verbindungsleitungen 12, 13 sind die Messelektroden 4, 5 mit der Regel-/Auswerteeinheit 8 verbunden. Die entsprechende Messinfoimation wird über Datenleitungen 12, 13, 14a an die Regel-/Auswerteeinheit 8 geleitet. Der konkrete Schaltungsaufbau, der zeigt, wie die Messsignale der Messelektroden 4,5 bezüglich des Erdpotentials der Referenzelektrode 17 abgegriffen werden, ist in Fig. 1 nicht explizit dargestellt, da er aus dem Stand der Technik hinreichend bekannt ist. Erwähnt seien an dieser Stelle die magnetisch-induktiven Durchflussmessgeräte, die von der Anmelderin unter der Bezeichnung PROMAG angeboten und vertrieben werden. Die Verbindung zwischen den Spulenanordnungen 6, 7 und der Regel-/Auswerteeinheit 8 erfolgt über die Verbindungsleitungen 14, 15. Die Regel-/Auswerteeinheit 8 ist über die Verbindungsleitung 16 mit einer Eingabe-/Ausgabeeinheit 9 verbunden. Der Auswerte-/Regeleinheit 8 ist die Speichereinheit 10 zugeordnet.

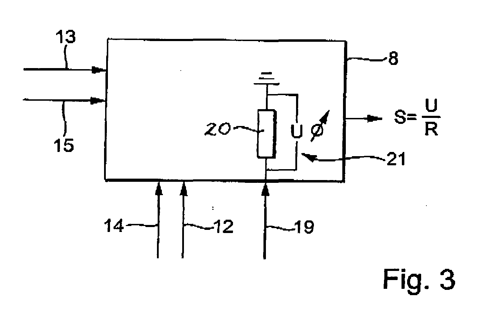

Fig. 2 zeigt eine schematische Darstellung einer bevorzugten Ausgestaltung des erfindungsgemäßen magnetisch-induktiven Durchflussmessgeräts 1. Dieses Durchflussmessgerät unterscheidet sich von dem bekannten in Fig. 1 dargestellten Gerät dadurch, dass der Referenzelektrode 17 ein Widerstand 20 nachgeschaltet ist. Detailliert sichtbar ist dies in dem in Fig. 3 gezeigten Ausschnitt aus Fig. 2. Der Widerstand 20 ist niederohmig und beträgt vorzugsweise lediglich einen Bruchteil eines Ohms. Der durch den Widerstand 20 fließende Strom I wird mittels einer Messeinrichtung 21 bestimmt. Dieser IST-Stromwert wird der Regel-/Auswerteeinheit 8 zu Verfügung gestellt. Hierbei ist erfindungsgemäß ein fließender I Strom ein eindeutiges Indiz dafür, dass an der Referenzelektrode 17 Korrosionsgefahr besteht. Sobald der IST-Stromwert einen vorgegebenen Grenzstromwert erreicht oder überschreitet, wird eine Warnmeldung generiert. Ein entsprechender Hinweis wird auf der Anzeigeeinheit 9 dargestellt. Alternativ oder additiv wird die Warnmeldung über eine Kommunikationseinheit 22 drahtlos oder über eine Verbindungs-leitung 23 an eine entfernte Stelle, z.B. ein Handheld oder eine Leitwarte 24 übertragen.

Wie bereits an vorhergehender Stelle erwähnt, nimmt die Regel-/Auswerte-einheit 8 eine Gewichtung der IST-Stromwerte vor. So fällt ein hoher IST-Strom stärker in Gewicht als ein niedriger IST-Strom. Darüber hinaus ist vorgesehen, dass die Regel-/Auswerteeinheit 8 die detektierten IST-Stromwerte über die Zeit aufintegriert. Hierdurch ist es möglich, eine Aussage zu treffen, wann spätestens das Durchflussmessgerät 1 oder zumindest eine Komponente des Durchflussmessgeräts 1, z.B. die Referenzelektrode 17, ausgetauscht werden muss. Zur Abspeicherung der Messdaten dient die Speichereinheit 10.

### Bezugszeichenliste

1. erfindungsgemäße Vorrichtung
2. Messrohr
3. Messrohrachse
4. Messelektrode
5. Messelektrode
6. Spulenanordnung
7. Spulenanordnung
8. Regel-/Auswerteeinheit
9. Eingabe-/Ausgabeeinheit
10. Speichereinheit
11. Medium
12. Verbindungsleitung
13. Verbindungsleitung
14. Verbindungsleitung
14a Verbindungsleitung
15 Verbindungsleitung
16 Verbindungsleitung
17 Referenzelektrode
18 Verbindungsleitung
19 Verbindungsleitung
20 Widerstand
21 Messeinrichtung
22 Kommunikationseinheit
23 Verbindungsleitung
24 Leitwarte

## Patentansprüche

1. Vorrichtung zum Messen des Volumen- oder Massestroms eines Mediums, das ein Messrohr (2) in Richtung der Messrohrachse (3) durchfließt, mit einem Magnetsystem (6, 7), das ein das Messrohr (2) durchsetzendes, im wesentlichen quer zur Messrohrachse (3) verlaufendes Magnetfeld (B) erzeugt, mit zumindest einer mit dem Medium (11) gekoppelten Messelektrode (4; 5), mit einer Referenzelektrode (17), die auf dem Erdpotential liegt, wobei die Referenzelektrode (17) mit einem Widerstand (20) verbunden ist, und mit einer Regel-/Auswerteeinheit (8), die anhand der in die zumindest eine Messelektrode (4, 5) induzierten Messspannung Information über den Volumen- oder Massestrom des Mediums (11) in dem Messrohr (2) liefert,
**dadurch gekennzeichnet,**
**dass** eine Messeinrichtung (21) vorgesehen ist, welche einen durch den Widerstand (20) fließenden IST-Stromwert bestimmt und diesen der Regel-/Auswerteeinheit (8) zu Verfügung stellt,
wobei die Regel-/Auswerteeinheit (8) den IST-Stromwert über eine vorgegebene Zeitspanne aufintegriert und den aufintegrierten IST-Stromwert mit in Abhängigkeit von der Lebensdauer des Messgeräts (1) oder einer einzelnen Komponente (17) des Messgeräts (1) abgespeicherten Stromwerten vergleicht und dass die Regel-/Auswerteeinheit (8) Information über die voraussichtliche Lebensdauer des Messgeräts (1) oder über die Lebensdauer der einzelnen Komponente (17) des Messgeräts (1) bereitstellt.

2. Vorrichtung nach Anspruch 1,
**dadurch gekennzeichnet,**
**dass** die Regel-/Auswerteeinheit (8) einen IST-Stromwert mit einem vorgegebenen Grenz-Stromwert vergleicht und
**dass** die Regel-/Auswerteeinheit (8) ein Warnmeldung generiert, wenn der IST-Stromwert den Grenz-Stromwert überschreitet.

3. Vorrichtung nach Anspruch 1,
**dadurch gekennzeichnet,**
**dass** der Widerstand (20) kleiner ist als 10 Ohm.

4. Vorrichtung nach Anspruch 1,
**dadurch gekennzeichnet,**
**dass** die IST-Stromwerte mittels beliebiger Gewichtung (z.B I², I³, I^{1/2}, etc) modifiziert werden.

5. Vorrichtung nach Anspruch 1 oder 3,
**dadurch gekennzeichnet,**
**dass** eine Anzeigeeinheit (9) vorgesehen ist, über die die Warnmeldung und/oder die Information über die verbleibende Lebendsauer des Messgeräts (1) oder der zumindest einen Komponente (17) des Messgeräts (1) darstellbar ist.

6. Vorrichtung nach Anspruch 1,
**dadurch gekennzeichnet,**
**dass** eine Kommunikationseinheit (22) vorgesehen ist, über die die Warnmeldung und/oder die Information über die Lebensdauer des Messgeräts (1) oder zumindest der einen Komponente (17) des Messgeräts (1) an eine entfernte Leitwarte übertragen wird.

7. Vorrichtung nach Anspruch 6,
**dadurch gekennzeichnet,**
**dass** die Kommunikationseinheit (22) die Wammeldung und/oder die Information drahtlos oder über eine Verbindungsleitung (23) an die Leitwarte (24) überträgt.

## Claims

1. Unit for measuring the volume flow or mass flow of a medium, which flows through a measuring tube (2) in the direction of the measuring tube axis (3), with a magnet system (6, 7), which generates a magnetic field (B) that passes through the measuring tube (2) and is essentially perpendicular to the measuring tube axis (3), with at least one measuring electrode (4, 5) coupled with the medium (11), with a reference electrode (17), which is at ground potential, wherein the reference electrode (17) is connected to a resistor (20), and with a control/evaluation unit (8) which uses the measuring voltage induced in the one measuring electrode (4, 5), at least, to provide information about the volume flow or mass flow of the medium (11) in the measuring tube (2),
**characterized in that**
a measuring system (21) is provided which determines an ACTUAL current value that flows through the resistor (20) and makes this value available to the control/evaluation unit (8),
wherein the control/evaluation unit (8) integrates the ACTUAL current value over a predefined time span and compares the integrated ACTUAL current value with current values that are saved depending on the service life of the measuring device (1) or an individual component (17) of the measuring device (1), and **in that** the control/evaluation unit (8) makes information available about the estimated service life of the measuring device (1) or the service life of the individual component (17) of the measuring device (1).

2. Unit as claimed in Claim 1,
**characterized in that**
the control/evaluation unit (8) compares an ACTUAL current value with a predefined limit current value and
**in that** the control/evaluation unit (8) generates a warning message when the ACTUAL current value exceeds the limit current value.

3. Unit as claimed in Claim 1,
**characterized in that**
the resistor (20) is smaller than 10 Ohms.

4. Unit as claimed in Claim 1,
**characterized in that**
the ACTUAL current values are modified with a random weighting (e.g. I², I³, I^{1/2}, etc.).

5. Unit as claimed in Claim 1 or 3,
**characterized in that**
a display unit (9) is provided via which the warning message and/or the information about the remaining service life of the measuring device (1) or of the one component (17), at least, of the measuring device (1) can be displayed.

6. Unit as claimed in Claim 1,
**characterized in that**
a communication unit (22) is provided via which the warning message and/or information about the service life of the measuring device (1) or of the one component (17), at least, of the measuring device (1) is transmitted to a remote control room.

7. Unit as claimed in Claim 6,
**characterized in that**
the communication unit (22) transmits the warning message and/or the information to the control room (24) via wireless technology or via a connection cable (23).

## Revendications

1. Dispositif destiné à la mesure du débit volumique ou massique d'un produit, qui traverse un tube de mesure (2) en direction de l'axe de tube de mesure (3), avec un système magnétique (6, 7), lequel génère un champ magnétique (B) traversant le tube de mesure (2), se déroulant pour l'essentiel perpendiculairement à l'axe du tube de mesure (3), avec au moins une électrode de mesure (4, 5) couplée avec le produit (11), avec une électrode de référence (17), qui est appliquée au potentiel de terre, l'électrode de référence (17) étant reliée à une résistance (20), et avec une unité de régulation / d'exploitation (8) qui, au moyen de la tension de mesure induite de l'au moins une électrode de mesure (4, 5), fournit des informations sur le débit volumique ou massique du produit (11) dans le tube de mesure (2),
**caractérisé en ce**
**qu'**est prévu un dispositif de mesure (21), lequel détermine une valeur de courant réel circulant à travers la résistance (20) et met celle-ci à disposition de l'unité de régulation / d'exploitation (8),
l'unité de régulation / d'exploitation (8) intégrant la valeur de courant réel dans un intervalle de temps prédéfini et comparant la valeur de courant réel intégrée avec des valeurs de courant enregistrées, qui varient en fonction de la durée de vie de l'appareil de mesure (1) ou d'un composant individuel (17) de l'appareil de mesure (1), et en ce que l'unité de régulation / d'exploitation (8) met à disposition les informations sur la durée de vie prévue de l'appareil de mesure (1) ou sur la durée de vie du composant individuel (17) de l'appareil de mesure (1).

2. Dispositif selon la revendication 1,
**caractérisé en ce**
**que** l'unité de régulation / d'exploitation (8) compare une valeur de courant réel avec une valeur de courant limite prédéfinie et
en ce que l'unité de régulation / d'exploitation (8) génère un message d'avertissement lorsque la valeur de courant réel dépasse la valeur de courant limite.

3. Dispositif selon la revendication 1,
**caractérisé en ce**
**que** la résistance (20) est inférieure à 10 ohms.

4. Dispositif selon la revendication 1,
**caractérisé en ce**
**que** les valeurs de courant réel sont modifiées au moyen d'une pondération quelconque (p. ex. I², I³, I^{1/2}, etc.).

5. Dispositif selon la revendication 1 ou 3,
**caractérisé en ce**
**qu'**est prévue une unité d'affichage (9), par l'intermédiaire de laquelle le message d'avertissement et/ou l'information sur la durée de vie restante de l'appareil de mesure (1) ou de l'au moins un composant (17) de l'appareil de mesure (1) peut être représentée.

6. Dispositif selon la revendication 1,
**caractérisé en ce**
**qu'**est prévue une unité de communication (22), par l'intermédiaire de laquelle le message d'avertissement et/ou l'information sur la durée de vie restante de l'appareil de mesure (1) ou de l'au moins un composant (17) de l'appareil de mesure (1) est transmise à une salle de contrôle distante.

7. Dispositif selon la revendication 6,
**caractérisé en ce**
**que** l'unité de communication (22) transmet le message d'avertissement et/ou l'information, sans fil ou par le biais d'un câble de raccordement (23), à la salle de contrôle.
